# EUROPEAN PATENT SPECIFICATION

(11) **EP 2 302 308 B1**
(45) Date of publication and mention of the grant of the patent: **17.08.2016**
(21) Application number: 10165360.8
(22) Date of filing: 09.06.2010
(51) Int. Cl.: F24J 2/51

(54) **Colored mineral wool**
Einfärbung von Mineralwolle
Coloration de laine minérale

(30) Priority: 10.06.2009 EP 09007724
(43) Date of publication of application: 30.03.2011
(73) Proprietor: Knauf Insulation, 4600 Visé (BE)
(72) Inventor: Gorazd, Sebenik, 9586 Fürnitz (AT); Smolej, Jure, 9586 Fürnitz (AT); Luznik, Tomas, 9586 Fürnitz (AT); Kejzar, Gorazd, 1435 Mont-Saint-Guibert (BE)
(74) Representative: Farmer, Guy Dominic

(56) References cited:
- EP-A- 1 376 027
- EP-A- 1 892 485
- EP-A1- 0 990 729
- WO-A1-93/25855
- DE-A1- 19 917 378

## Description

The present invention relates to a solar collector comprising a colored mineral wool and a use of said colored mineral wool in a solar collector.

Solar collectors are used to convert solar radiation into heat and to transfer said heat into a circulating medium (carrier fluid), such as a liquid or a gas. For example, such heat can subsequently be used to heat water, to back up heating systems or to adjust the temperature in swimming pools.

Solar collectors can be constructed in a variety of different forms, such as in a flat plate shape, a column shape, etc. For example, a typical flat plate solar collector comprises a transparent cover, an absorber, a housing and an insulation. When the solar radiation passes through the transparent cover and is absorbed by the absorber, a carrier fluid which passes through said absorber is heated and can transfer the absorbed energy to the desired application or process.

However, in order to effectively use the solar radiation for heating the carrier fluid, the housing of the solar collector has to be thermally insulated. In addition, the absorber itself as well as the connecting tubing which penetrates the housing must be thermally insulated from the case at all points of support, in order not to lose a high amount of the heat energy entering the solar collector.

Said insulation is usually achieved by lining or covering the housing and other components with a thin fleece or sheet made of polymers such as polyurethane, polyisocyanurate or mineral fibers fixed with resin. Such insulation materials can be easily formed and handled and have high insulation values.

In order to further improve the insulation value of such materials and to enhance the adsorption properties of the whole solar collector, a black or dark colored film or foil is usually laminated using an adhesive as a top layer onto said insulation fleece. Such laminates are well known in the art and have superior insulation properties.

For example, EP1 376 027 A1 discloses a solar panel which comprises: a metal box (10); a layer of mineral wool insulation (20), the outer surface of which is provided with a layer of aluminium reflector foil (30); a glass cover (50); and an absorber (40) located within a cavity (35) between the glass cover (50) and the aluminium reflector foil (30). The absorber (40) comprises a matrix of fibers (80) which may be either glass fibres or steel wool fibers, each fibre of the absorber typically being 3 to 4 m in length, 25 to 50 microns in diameter and being bonded together with melamine formaldehyde having black dye.

EP1 892 485 A1 relates to the use of a formaldehyde-free polymeric binder system for mineral wool insulation of a solar collector. Various fibres are disclosed for the mineral wool insulation including glass wool, stone wool and black (e.g. iron-containing) mineral wool but there is no disclosure of how a black (e.g. iron-containing) mineral wool could be produced. Paragraph [0107] discloses that the mineral wool insulation of the solar collector is often combined with a cover layer of aluminium foil or coated with a silicate paint.

EP 0 990 729 A1 relates to a fiberglass binder comprising an aqueous solution of a polycarboxy polymer and a polyol, with the pH of the binder being no greater than 3.5 and discloses that the formaldehyde-free curable aqueous binder composition may contain, in addition, conventional treatment components such as, for example, emulsifiers, pigments, filler, anti-migration aids, curing agents, coalescents, wetting agents, biocides, plasticizers, organosilanes, anti-foaming agents, colorants, waxes, and anti-oxidants.

At high temperatures which are like to occur in summer and after a prolonged exposure to sunlight, the adhesive used to laminate the film onto the insulation fleece or chemical components of said adhesive tend to be evaporated and condensed on the inside of the transparent cover. Apart from potential health and environmental hazards connected to such evaporated material, the efficacy of the respective solar collector is significantly reduced through the decrease of transparency of the transparent cover.

Accordingly, there is a need for an insulation material usable in solar collectors which avoids the aforementioned disadvantages, and for solar collectors comprising such a material.

Thus, the technical problem underlying the present invention is to provide a solar collector comprising a material, which has effective insulation properties and which reduces or avoids the decrease of the efficacy of the solar collector due to evaporating chemical compounds, as well as to provide a material having such features for use in solar collector and similar devices.

The solution to the above-mentioned technical problem is achieved by the features of claim 1. Further embodiments are characterized in the dependent claims. According to the invention defined in claim 1, a solar collector is provided which comprises a colored mineral wool, wherein said colored mineral wool comprises a mineral wool and a binder composition, said binder composition comprising a binder and a coloring agent.

According to the present invention, the expression "mineral wool" as used herein may include any mineral fibers or man-made mineral fibers which are made from natural or synthetic minerals or metal oxides, such as glass wool, fiberglass, ceramic fibers, or stone and rock wool.

According to one embodiment of the present invention, the mineral wool in the colored mineral wool of the above-defined solar collector is selected from the group consisting of glass wool, glass filaments, ceramic fibers, basalt fibres, slag wool, and stone wool.

A further embodiment of the present invention relates to a solar collector as defined above, wherein said mineral wool has a bulk density (RD) of 1 to 200 kg/m³.

For example, the mineral wool usable in the solar collector according to the present invention may have a bulk density of 10 to 120 kg/m³ and preferably of 30 to 70 kg/m³.

The binder composition of the present invention comprises a binder and a coloring agent but may further contain additives which improve the handling of the binder composition or which enhance the properties of the final product, i.e. of the colored mineral wool of the solar collector. In this context, the expression "binder composition" as used herein includes any combination of binders and coloring agents which allow for the production of a colored mineral wool for use in a solar collector as defined above. The binder and coloring agent may be the same compound, in case the binder itself has a suitable color or darkness which falls under the definitions provided hereafter. Mineral wool having standard phenol formaldehyde binders are generally light yellow (particularly for glass wool) or ochre (particularly for stone wool); mineral wool having such colors is not suitable in relation to the present invention.

The above binder composition when applied to the mineral wool may comprise 1 to 30 wt.-%, preferably 5 to 25 wt-% and more preferably 10 to 20 wt.-% of a binder, as well as 0.1 to 10 wt.-%, preferably 1 to 8 wt.-% and more preferably 2 to 4 wt.-% of a coloring agent. Said binder composition when applied to the mineral wool may further comprise a solvent, such as water, an alcohol, a solution containing salts and further additives, as well as combinations of two or more of such components. According to a preferred embodiment of the present invention, the binder composition when applied to the mineral wool comprises a binder, a coloring agent and water.

The colored mineral wool of the solar collector of the present invention is not specifically restricted and may include any ratio of mineral wool and binder composition which is suited to efficiently function as a thermal insulation material in a solar collector.

According to a specific embodiment of the above-defined solar collector, the content of the binder composition in the colored mineral wool is in the range of 0.01 to 15 wt.-% with respect to the total weight of the colored mineral wool.

For example, the colored mineral wool of the solar collector of the present invention may comprise said binder composition in a content in the range of 0.1 to 10 wt.-%, and preferably in the range of 0.5 to 5 wt.-%, with respect to the total weight of the colored mineral wool. In a specific example of the present invention, the content of the binder composition in the above-defined colored mineral wool is 0.5 to 2 wt.-% with respect to the total weight of the colored mineral wool.

Moreover, the term "binder" according to the present invention is not restricted in any way, as long as it can be used in a suitable form, such as in a liquid binder composition, together with a coloring agent. Preferably, the binder is a resin, particularly a formaldehyde-based resin. However, the binder may also be a formaldehyde-free resin, such as a sugar-based binder. In a preferred embodiment of the above-defined colored mineral wool, said binder is a phenol formaldehyde resin.

The binder is preferably distributed substantially uniformly throughout the mineral wool insulation; this facilitates manufacturing using techniques employed on existing manufacturing plants for manufacturing standard products.

According to a further embodiment of the above-defined solar collector, the content of the binder in the binder composition is in the range of 1 to 30 wt.-% with respect to the total weight of the binder composition.

The term "coloring agent" used herein is not specifically restricted and may include any compound which can be used to dye or darken a mineral wool.

The terms "dye" and "darken" used herein are not specifically restricted in terms of the hue and intensity of the coloring, as long as the heat absorption of the colored mineral wool is enhanced when compared to the non-colored mineral wool. However, according to the present invention, a color is preferred which is suited to increase the light and/or the infrared absorption of the resulting colored mineral wool.

Preferably, the entire thickness of the mineral wool insulation has a substantially uniform color. Nevertheless, if desired, color may be present exclusively or in greater quantity at or towards the top layer of the mineral wool insulation.

According to another embodiment of the present invention, the colored mineral wool of the above-defined solar collector has a darkness, i.e. a light and/or infrared absorption of at least a color corresponding to RAL 7004, preferably corresponding to RAL 7011, and more preferably corresponding to RAL 9011. According to a specific example of the present invention, the coloring agent is a black color, such as RAL 9005.

According to a further embodiment of the present invention, the colored mineral wool of the above-defined solar collector has a color, wherein L * is lower than 40, preferably lower than 39, lower than 38, or lower than 37, and more preferably lower than 36, lower than 35, or lower than 32, a* is in the range of -10 to +10, or -8 to +8, preferably in the range of -6 to +6, -5 to +5, or -4 to +4, and more preferably in the range of -3 to +3, or -2 to +2, and b* is in the range of -10 to +10, or -8 to +8, preferably in the range of -6 to +6, -5 to +5, or -4 to +4, and more preferably in the range of -3 to +3, or -2 to +2, wherein L*, a* and b* are color or coordinates defined in the CIELAB 1976 color space system.

Moreover, the coloring agent may be a combination of two or more coloring agents and may further comprise additives such as stabilizers, emulgators, pigments, and hydrophilic agents.

According to a preferred embodiment of the above-defined solar collector, the coloring agent is selected from the group consisting of C.I. 31600, C.I. Direct Black 80, Diazophenyl Black BW and Phenazo Black OB, soots, iron oxides, or any combination thereof.

In a specific embodiment of the above-defined solar collector, the content of the coloring agent in the binder composition is in the range of 0.1 to 10 wt.-% with respect to the total weight of the binder composition.

According to the present invention, the colored mineral wool of the above-defined solar collector may have any shape which is usable for thermally insulating said solar collector. For example, the mineral wool may be in form of a block, a sheet, pellets or flakes.

According to preferred embodiment of the present invention, the colored mineral wool of the above-defined solar collector is in form of a sheet having a thickness of 1 to 200 mm.

In a preferred example of the present invention, the mineral wool is a sheet-like fleece. The thickness of such a sheet or fleece may, for example, be in the range of 5 to 150 mm, and preferably in the range of 20 to 70 mm.

A colored mineral wool as defined above may be produced by a method comprising the steps of (a) contacting mineral wool with a liquid binder composition comprising 0.1 to 10 wt.-% of a coloring agent and 1 to 30 wt.-% of a binder, and (b) drying said mineral wool.

Herein, the term "contacting" is not especially restricted but refers to any process step which is suited to bring the mineral wool into contact with the binder composition. Examples of the "contacting" step include spraying the binder composition onto the mineral wool, submerging the mineral wool into a solution containing said binder composition or applying the binder composition by other means known in the art onto the mineral wool.

In the method, the binder composition and the coloring agent are as defined above, if not indicated otherwise.

According to another embodiment of the method as defined above, the mineral wool is contacted with said binder composition by spraying said binder composition onto the mineral wool or by at least partly submerging the mineral wool in said binder composition.

According to the present invention, there is also provided a use of colored mineral wool as an insulation material for solar collectors as claimed in claim 13. Such a use includes the use of said mineral wool in any type of solar collector, e.g. in plate-shape or columnar collectors. Moreover, the mineral wool of the present invention may be used in combination with other insulation materials or may be modified before use in a solar collector. According to the present invention, the colored mineral wool may be used e.g. in the tray, frame, facade, or other components of a solar collector, and may be used in any type of solar collector the efficacy of which may be increased by using a colored mineral wool as defined herein.

The solar collector of the present invention which comprises a colored mineral wool is surprisingly advantageous, since it contains a heat absorbing insulation material which increases the collector's efficiency but does not decrease its efficacy over lifetime by releasing detrimental chemical components. Moreover, the colored mineral wool of the present invention is highly advantageous, since it enables the surprisingly effective thermal insulation of a solar collector, without the need of laminating a dark film or foil on top of it using an adhesive. Thus, even at high temperatures and prolonged exposition to solar radiation no adhesive or chemical components thereof can evaporate and condense on the inside of the transparent cover. Accordingly, the efficiency of said solar collector is maintained over an advantageously long period of time. Moreover, the colored mineral wool when used as a thermal insulation material in a solar collector completely avoids the release of toxic vapors, which is considered an environmental or health hazard.

In addition, the production of such a colored mineral wool is surprisingly efficient when compared to the lamination of a film or foil onto the top surface of the mineral wool of the state of the art. Such a lamination step is not only more time consuming and expensive, but also requires a far more complex apparatus or machinery. Moreover, colored mineral wool of the present invention when used in a solar collector has a positive visual and aesthetic effect on the product.

## Claims

1. A solar collector, comprising an absorber arranged between a cover and a mineral wool insulation, the said mineral wool insulation comprising mineral wool fibres and a binder composition, **characterized in that** the binder composition comprises the binder and a coloring agent which darkens the mineral wool.

2. The solar collector according to claim 1, wherein the content of the coloring agent in the binder composition is in the range of 0.1 to 10 wt.-% with respect to the total weight of the binder composition.

3. The solar collector according to any preceding claim, wherein said mineral wool has a bulk density (RD) of 30 to 70 kg/m³.

4. The solar collector according to any preceding claim, wherein the content of the binder composition in the colored mineral wool is in the range 0.01 to 15 wt.-% with respect to the total weight of the colored mineral wool.

5. The solar collector according any preceding claim, wherein said binder is a phenol formaldehyde resin.

6. The solar collector according any of claims 1 to 4, wherein said binder is a formaldehyde-free binder.

7. The solar collector according to any preceding claim, wherein said coloring agent is selected from C.I 31600, C.I Direct Black 80, Diazophenyl Black BW and Phenazo Black OB, soots, iron oxide, or any combination thereof.

8. The solar collector according to any preceding claim, wherein the colored mineral wool has a darkness of at least a color corresponding to RAL 7004.

9. The solar collector according to any preceding claim, wherein the mineral wool insulation is black.

10. The solar collector according to any preceding claim, wherein said colored mineral wool is in form of a sheet having a thickness of 5 to 150 mm.

11. The solar collector according to any preceding claim, wherein no film or foil is laminated using an adhesive as a top layer on the mineral wool insulation.

12. The solar collector according to any claim 11, wherein the top layer of the mineral wool insulation is an exposed layer which is not covered with a film or foil.

13. Use of mineral wool insulation comprising mineral wool fibres in a solar collector, **characterized in that** the mineral wool insulation comprises a binder composition which comprises a binder and a coloring agent to provide effective insulation whilst avoiding the use of a film or foil laminated using an adhesive as a top layer of said mineral wool insulation.

14. Use of mineral wool insulation in accordance with claim 13, in which the mineral wool insulation has a darkness of at least a color corresponding to RAL 7004.

15. Use of mineral wool insulation in accordance with claim 13 or claim 14, in which the mineral wool insulation is black.

## Patentansprüche

1. Solarkollektor, umfassend einen Absorber, angeordnet zwischen einer Abdekkung und einer Mineralwolleisolation, wobei die Mineralwolleisolation Mineralwollefasern und eine Bindemittelzusammensetzung umfaßt, **dadurch gekennzeichnet, dass** die Bindemittelzusammensetzung das Bindemittel und ein Färbemittel umfaßt, welches die Mineralwolle abdunkelt.

2. Solarkollektor nach Anspruch 1, wobei der Gehalt des Färbemittels in der Bindemittelzusammensetzung in dem Bereich von 0,1 bis 10 Gew.-%, bezogen auf das Gesamtgewicht der Bindemittelzusammensetzung, liegt.

3. Solarkollektor nach einem der vorhergehenden Ansprüche, wobei die Mineralwolle eine Rohdichte (RD) von 30 bis 70 kg/m³ aufweist.

4. Solarkollektor nach einem der vorhergehenden Ansprüche, wobei der Gehalt der Bindemittelzusammensetzung in der gefärbten Mineralwolle in dem Bereich von 0,01 bis 15 Gew.-%, bezogen auf das Gesamtgewicht der gefärbten Mineralwolle, liegt.

5. Solarkollektor nach einem der vorhergehenden Ansprüche, wobei das Bindemittel ein Phenolformaldehydharz ist.

6. Solarkollektor nach einem der Ansprüche 1 bis 4, wobei das Bindemittel ein formaldehydfreies Bindemittel ist.

7. Solarkollektor nach einem der vorhergehenden Ansprüche, wobei das Färbemittel aus C.I 31600, C.I Direct Black 80, Diazophenyl Black BW und Phenazo Black OB, Rußen, Eisenoxid, oder einer beliebigen Kombination davon ausgewählt ist.

8. Solarkollektor nach einem der vorhergehenden Ansprüche, wobei die gefärbte Mineralwolle eine Dunkelheit von mindestens einer Farbe aufweist, welche RAL 7004 entspricht.

9. Solarkollektor nach einem der vorhergehenden Ansprüche, wobei die Mineralwolleisolation schwarz ist.

10. Solarkollektor nach einem der vorhergehenden Ansprüche, wobei die gefärbte Mineralwolle in Form eines Blattes mit einer Dicke von 5 bis 150 mm vorliegt.

11. Solarkollektor nach einem der vorhergehenden Ansprüche, wobei weder ein Film oder eine Folie unter Verwendung eines Haftmittels als eine obere Schicht auf die Mineralwolleisolation laminiert ist.

12. Solarkollektor nach Anspruch 11, wobei die obere Schicht der Mineralwolleisolation eine freigelegte Schicht ist, welche nicht mit einem Film oder einer Folie bedeckt ist.

13. Verwendung einer Mineralwolleisolation, umfassend Mineralwollefasern, in einem Solarkollektor, **dadurch gekennzeichnet, dass** die Mineralwolleisolation eine Bindemittelzusammensetzung umfaßt, welche ein Bindemittel und ein Färbemittel umfaßt, um wirksame Isolation bereitzustellen, während die Verwendung eines Films oder einer Folie, welche unter Verwendung eines Haftmittels als eine obere Schicht auf die Mineralwolleisolation lamiert ist, vermieden wird.

14. Verwendung einer Mineralwolleisolation nach Anspruch 13, in welcher die Mineralwolleisolation eine Dunkelheit von mindestens einer Farbe aufweist, welche RAL 7004 entspricht.

15. Verwendung einer Mineralwolleisolation nach Anspruch 13 oder Anspruch 14, in welcher die Mineralwolleisolation schwarz ist.

## Revendications

1. Un capteur solaire contenant un absorbant disposé entre un revêtement et un isolant en laine minérale, ledit isolant contenant des fibres de laine minérale et un composant liant, **caractérisé en ce que** le composant liant contient le liant et un agent colorant qui assombrit la laine minérale.

2. Le capteur solaire selon la revendication 1, dans lequel la quantité d'agent colorant dans le composant liant est dans la gamme allant de 0.1 à 10 % en masse par rapport à la masse totale du composant liant.

3. Le capteur solaire selon l'une quelconque des revendications précédentes, dans lequel la laine minérale a une masse volumique (RD) dans la gamme allant de 30 à 70 kg/m³.

4. Le capteur solaire selon l'une quelconque des revendications précédentes, dans lequel la quantité du composant liant de la laine minérale colorée est dans la gamme de 0.01 à 15 % en masse, par rapport à la masse totale de la laine minérale colorée.

5. Le capteur solaire selon l'une quelconque des revendications précédentes, dans lequel le liant est une résine phénol-formaldéhyde.

6. Le capteur solaire selon les revendications de 1 à 4, dans lequel le liant est un liant sans formaldéhyde.

7. Le capteur solaire selon l'une quelconque des revendications précédentes, dans lequel l'agent colorant est sélectionné parmi C.I 31600, C.I Direct Black 80, Diazophenyl Black BW et Phenazo Black OB, suie, oxyde de fer, ou n'importe quelle combinaison de ceux-ci.

8. Le capteur solaire selon l'une quelconque des revendications précédentes, dans lequel la laine minérale colorée a une noirceur d'au moins une couleur correspondant à RAL 7004.

9. Le capteur solaire selon l'une quelconque des revendications précédentes, dans lequel l'isolant en laine minérale est noir.

10. Le capteur solaire selon l'une quelconque des revendications précédentes, dans lequel la laine minérale colorée est de la forme d'une feuille ayant une épaisseur de 5 à 150mm.

11. Le capteur solaire selon l'une quelconque des revendications précédentes, dans lequel aucun film ou feuille laminé à l'aide d'un adhésif ne sert de couche supérieure sur l'isolant en laine minérale.

12. Le capteur solaire selon la revendication 11, dans lequel la couche supérieure de l'isolant en laine minérale est une couche apparente non recouverte d'un film ou d'une feuille.

13. Utilisation d'un isolant en laine minérale dans un capteur solaire, **caractérisé en ce que** l'isolant en laine minérale contient un composant liant contenant un liant et un agent colorant afin de fournir une isolation effective tout en évitant l'utilisation d'un film ou d'une feuille laminé à l'aide d'un adhésif comme couche supérieure dudit isolant en laine minérale.

14. Utilisation d'un isolant en laine minérale selon la revendication 13, dans laquelle l'isolant en laine minérale a une noirceur d'au moins d'une couleur correspondant à RAL 7004.

15. Utilisation d'un isolant en laine minérale selon les revendications 13 ou 14, dans laquelle l'isolant en laine minérale est noir.
